# EUROPÄISCHE PATENTSCHRIFT

(11) **EP 0 959 292 B1**
(45) Veröffentlichungstag und Bekanntmachung des Hinweises auf die Patenterteilung: **07.09.2005**
(21) Anmeldenummer: 98118966.5
(22) Anmeldetag: 07.10.1998
(51) Int. Cl.: F17C 13/04, B01L 9/02

(54) **Gasarmatur**
Gas fitting
Robinet à gaz

(30) Priorität: 19.05.1998 DE 19822369
(43) Veröffentlichungstag der Anmeldung: 24.11.1999
(73) Patentinhaber: Messer Griesheim Schweisstechnik GmbH + Co., 64823 Gross-Umstadt (DE)
(72) Erfinder: Elgert, Uwe, 60386 Frankfurt (DE); Elsner, Peter, 65933 Frankfurt (DE)
(74) Vertreter: Staudt, Armin Walter

(56) Entgegenhaltungen:
- EP-A- 0 629 937
- FR-A- 2 176 058
- FR-A- 2 735 209
- FR-A- 2 761 454
- US-A- 4 187 881
- US-A- 4 887 645
- US-A- 5 152 318

## Beschreibung

Die Erfindung betrifft eine Gasarmatur mit Absperrelement (Absperrventil) für den Vordruck, Druckregler und Manometer zur Druckanzeige.

Labor-Gasentnahmestellen werden bisher sehr uneinheitlich aufgebaut. Die wichtigsten Baueinheiten Vordruckabsperrventil, Entnahmestellendruckregler und Hinterdruckmanometer werden als getrennte Einheiten sichtbar nebeneinander angeordnet. Eine solche Gasentnahmestelle ist beispielsweise beschrieben in DE 42 23 233 C1 (interne Bezeichnung MG 1849).

Die bekannten Gasentnahmestellen haben folgende Nachteile:
- Variantenvielfalt der Labor-Gasentnahmestellen, bedingt durch verschiedene Einbausituationen in den Labormöbeln: Tischarmatur, Energiezeilen, Energiebrücken, Abzugsarmatur (lang und schmal) und Standsäulen-Armatur,
- unübersichtliches Erscheinungsbild durch verschiedene Bedienebenen und viele Ecken und Kanten,
- eine Vielzahl von Abdichtstellen und Verschraubungen zwischen den einzelnen Bauteilen,
- zu große Abmessungen,
- ein hoher Aufwand für die Lagerhaltung durch die Teilevielfalt,
- aufwendige Wartung,
- ungenügende Ergonomie und
- zu hohes Gewicht.

Aufgabe der Erfindung besteht in der Bereitstellung einer Gasarmatur mit einer kompakten Bauweise und ohne die obengenannten Nachteile.

Eine Gasarmatur, die kompakt ist, wurde bereits in US 4 887 645 veröffentlicht.

Gelöst wurde die Aufgabe durch eine Gasarmatur gemäß der Merkmale von Anspruch 1.

Druckgasquellen sind beispielsweise Druckgasbehälter, Druckgasflaschen, Druckdosen und insbesondere Druckgasleitungen. Die Druckgasquelle liefert Gase oder Gasgemische, z. B. technische Gase oder Reinstgase wie Stickstoff, Sauerstoff, Wasserstoff, synthetische Luft, Edelgase (z. B. Helium, Argon, Krypton, Xenon), Kohlendioxid, Ammoniak oder Gasgemische, insbesondere Prüfgasgemische.

Die Gasarmatur enthält ein drehbares Griffteil, das als Bedienelement für einen Druckregler dient. Vorzugsweise ist das Bedienelement ein zylinderförmiges Teil, das hohl und an beiden Enden geöffnet ist, oder eine Kappe. Das Bedienelement enthält ein Druckmeßinstrument (Manometer) mit Druckanzeige. Das Manometer dient vorzugsweise zur Messung und Anzeige des Hinterdruckes (erniedrigter Druck nach dem Druckregler). Zwischen Bedienelement für den Druckregler und Manometer besteht in der bevorzugten Bauweise keine mechanische Verbindung. Bei einer Drehung des Bedienelementes zur Einstellung des Hinterdruckes am Druckregler bleibt dadurch das Manometer in unveränderter Stellung. Bevorzugt werden Manometer mit zylindrischer Form mit einem zentralen Gaseinlaß (Gaseingang) auf der Unterseite und einer Druckanzeige an der Oberseite (Kopfseite, Bedienerseite) eingesetzt (dosenförmiges Manometer). Der Gaseingang des Manometers wird vorzugsweise über eine Steckverbindung angeschlossen und fest montiert (vorzugsweise gesichert über eine Feststellschraube, z. B. Madenschraube). Das Fenster der Druckanzeige ist in der Regel ein Teil des Manometers. Vorteilhaft ist die Druckanzeige mit einem gewölbten Fenster abgedeckt. Bei Verwendung eines Zeigerinstrumentes ist ein gebogener oder dreidimensional gestalteter Zeiger bevorzugt. Die Verwendung eines nach außen (Oberseite) gewölbten Fensters und eines Zeigers mit einem aus der Zeigerebene hervorstehenden Teiles erlaubt zusätzlich eine gute Ablesbarkeit von der Seite. Statt der Verbindung des Fensters der Druckanzeige mit dem Manometer kann das Fenster auch ein Teil des Bedienelementes sein. Beispielsweise kann das als Bedienelement dienende Griffteil mit dem Fenster eine Kappe bilden. Das Fenster ist dann nicht mit dem Manometer verbunden und dreht sich mit dem Griffteil.

Das Fenster der Druckanzeige ist eine transparente Abdeckung, z. B. eine flache Scheibe, ein gewölbtes Teil wie eine Kunststoffschale oder ein massives Kunststoffteil, das vorteilhaft vollständig oder partiell eine gewölbte Form aufweist. Das massive Kunststoffteil wirkt vorzugsweise wie eine Linse, wodurch die Ablesbarkeit der Druckanzeige (Druckskala) verbessert wird.

Das Fenster der Druckanzeige (transparente Abdeckung) besteht vorzugsweise aus einem transparenten Kunststoff wie Polystyrol, Polypropylen, Polycarbonat, Cycloolefincopolymer (COC), Acrylglas oder Polymethacylate (PMMA). Besonders geeignet sind Polycarbonat, Cycloolefincopolymer (COC), Acrylglas oder Polymethacylate (PMMA).

Das Griffteil (Bedienelement des Druckreglers) ist in der Regel undurchsichtig und wird aus Kunststoff (z. B. Polypropylen, Polyamid, ABS, Polyester) oder Metall (z. B. Messing, Edelstahl, Aluminium) hergestellt. Das Griffteil ist vorzugsweise mit Griffhilfen ausgestattet. Griffhilfen sind beispielsweise besondere Oberflächenausformungen wie Vertiefungen, Mulden, Rillen, Noppen oder Stege. Griffhilfen können auch zusätzliche Teile oder Überzüge aus Kunststoff, Gummi, gummiähnlichem Material oder einem Elastomer, insbesondere ein thermoplastisch verarbeitbares Elastomer sein, die auf dem Griffteil angebracht sind, z. B. ein Überzug, Ringe, eine Hülse oder ein Band, Noppen, Stege oder Kissen.

Die äußeren Teile der Gasarmatur wie Griffteil, Absperring und Verkleidung sind vorzugsweise aus Kunststoff.

Die Gasarmatur enthält in der Regel einen Grundkörper, an dem das Absperrelement und der Druckregler angeordnet ist. Der Grundkörper der Gasarmatur besteht aus einem thermisch formbaren Material wie Metall oder Kunststoff. Der Grundkörper besteht vorzugsweise aus Metall, insbesondere Messing (vorzugsweise vernickelt) oder Edelstahl, und weist vorzugsweise an einem Ende (unteres Ende) einen Anschluß, z. B. Gewindeanschluß oder Bajonettanschluß, zur Befestigung an der Druckgasquelle (in der Regel die Druckgasleitung) auf. Der Grundkörper ist vorzugsweise zylindrisch aufgebaut. Der Grundkörper enthält Gaskanäle, beispielsweise in Form von Bohrungen. Im allgemeinen befindet sich der Eingang für das komprimierte Gas (Hochdruckseite, Vordruck) und der Anschluß zur Druckgasquelle auf der Stirnfläche (unteres Ende) des stehenden zylindrischen Körpers. Vom Gas-Eingang führt ein Gaskanal zu einem Absperrelement (vorzugsweise seitlich integriert) und vom Absperrelement zum Druckregler (vorzugsweise im Kopfbereich des Grundkörpers). Vom Druckregler wird das auf den Hinterdruck gebrachte Gas zu einem Ausgang geführt, der vorzugsweise seitlich im Grundkörper angeordnet ist.

Die Gasarmatur vereint Absperrelement, Druckregler und Druckanzeigeinstrument (Manometer) auf engstem Raum. Der Raum ist im wesentlichen ein zylindrischer oder zylinderförmiger Raum mit vorzugsweise kappenförmigem Ende (an der Kopfseite). In diesem zylindrischen Raum ist ein Grundkörper enthalten, der Absperrelement und Druckregler aufnimmt. Die Gasarmatur erscheint dem Betrachter daher wie ein Teil. In dem zylindrischen Raum sind Absperrelement und Druckregler zwischen Druckgasquelle und Manometer angeordnet. Anders ausgedrückt, sind Manometer, Druckregler und Absperrelement hintereinander (in einer Reihe) angeordnet, wobei die Teile in der Regel in einer Flucht stehen. Das heißt der Querschnitt der Gasarmatur wird im wesentlichen durch die Querschnittsfläche des Manometers beziehungsweise des Griffteiles bestimmt. Der Querschnitt (die Breite) der Gasarmatur ist im allgemeinen nicht größer als der Querschnitt (die Breite) des Griffteiles (Bedienelement des Druckreglers).

Der zylindrische Raum (beziehungsweise zylindrische Körper) ist vorzugsweise an einem Ende (oberes Teil, Kopf) abgerundet. An diesem Ende befinden sich Griffteil (Bedienelement des Druckreglers) und das Fenster der Druckanzeige. Durch die Abrundung des Kopfes ist eine bessere Handhabbarkeit des Griffteiles, d. h. eine bessere Ergonomie, gegeben.

Vorzugsweise wird die Verbindung zwischen Gasweg auf der Hinterdruckseite und dem Manometer über eine zentrale Öffnung oder Bohrung in einem zentralen Teil des Druckreglers hergestellt, beispielsweise durch eine Membranstange mit zentraler Bohrung bei einem Druckregler auf Basis von einem Membranventil. Das Manometer wird vorzugsweise durch eine nicht drehbare Steckverbindung mit O-Ring-Dichtung an dem Druckregler befestigt. Die Stellung des Manometers wird beispielsweise mittels einer Feststellschraube (Madenschraube) fixiert. Über das Griffteil (Bedienelement) wird der Regeldruck des Druckreglers eingestellt.

Das Absperrelement ist vorzugsweise ein Gasventil, z. B. ein Stopfbuchsventil, ein Schieber, eine drehbare Scheibe mit Gasdurchlaßöffnung, ein Kugelventil oder Membranventil. Ein Membranventil wird als Absperrelement besonders bevorzugt verwendet, insbesondere bei Reinstgas-Anwendungen. Vorteilhaft schließt das Absperrelement mit dem Vordruck. Bei Erhöhung des Vordruckes erhöht sich der Schließdruck. Dies führt zu einer erhöhten Sicherheit.

Das Absperrelement wird über eine Verstelleinrichtung bedient. Eine Verstelleinrichtung ist beispielsweise ein Drehring, ein Schiebering, ein Rad, ein Hebel, ein Druckknopf, eine Drucktaste, ein Schalter, ein Schiebeschalter oder ein Wippschalter. Die Verstelleinrichtung ist direkt oder indirekt mit der Schließeinrichtung (z. B. Schließbolzen eines Ventils) des Absperrelementes gekoppelt. Das Absperrelement wird bevorzugt über einen Drehring (Absperring) bedient, der wie ein Zylindermantelsegment an der zylindrischen Außenfläche der Gasarmatur ausgebildet ist. Die Drehachse des Drehringes verläuft also parallel zur Längsachse der Gasarmatur. Der Drehring kann über die Zylinderfläche der Gasarmatur herausragen. Der Drehring ist an der Außenseite vorzugsweise mit einer Griffhilfe versehen, z. B. ein zapfenförmiges Stück (Stellfahne genannt). In der bevorzugten Ausführung der Gasarmatur ist neben einem seitlichen Ausgang zum Anschluß einer Gasentnahmeleitung oder einer Schlauchleitung die Stellfahne das einzige Teil, das aus dem zylindrischen Körper der Gasarmatur seitlich herausragt. Die Stellfahne ist vorzugsweise austauschbar. Die Stellfahne kann beispielsweise mittels einer einrastenden Steckverbindung am Absperring befestigt werden. Die Stellfahne ist vorteilhaft gasartspezifisch gefärbt. Die gasartspezifische farbliche Gestaltung der austauschbaren Stellfahne am Absperring erlaubt eine einfache und flexible integrierte Gasartkennzeichnung.

Eine Drehbewegung des Absperringes wird je nach Drehrichtung in eine öffnende oder schließende Bewegung des Absperrelementes übertragen. Zur Übertragung können unterschiedliche Vorrichtungen eingesetzt werden, z. B. Zahnradantrieb (Kegelzahnräder; rechtwinklig zueinander angeordnete flache Zahnräder; Schnecke/Zahnrad), Friktionsantrieb (Ring/Rad), Hebelübersetzung (Ring/Hebel) oder Riemenantrieb. Bei einem seitlich im Grundkörper angeordneten Drehventil als Absperrelement stehen im allgemeinen die Drehachsen von Absperring und Drehventil im rechten Winkel zueinander.

Die Stellung des Absperrelementes ("Auf" oder "Zu") ist anhand von Stellfahne/Absperring im Gegensatz zu einem Handrad eindeutig und direkt erkennbar. Die Stellposition "Auf" oder "Zu" ist zusätzlich über ein Anzeigefenster oder eine Aussparung in der Verkleidung der Gasarmatur ersichtlich. Die beiden Stellpositionen werden vorzugsweise durch zwei Einrastpositionen und/oder zwei Anschläge vorgegeben. Die in der Regel integrierte Übersetzung des Antriebes führt zu einer leichtgängigen Bedienbarkeit des Absperrelementes, das an sich wegen des anliegenden Vordruckes schwerer zu verstellen ist.

Die Gasarmatur wird vorteilhaft über ein Zwischenstück (Spannmuffe) mit einem Linksgewinde an einem Ende und einem Rechtsgewinde am anderen Ende mit der Druckgasquelle (in der Regel eine Druckgasleitung mit Gewindeanschluß) verbunden, wobei entsprechende, unterschiedliche Gewinde bei Gaseingang der Gasarmatur und Gasausgang der Druckgasquelle vorgesehen werden. Die Montage der Gasarmatur vereinfacht sich dadurch wesentlich. Das Zwischenstück wird zwischen die zu verbindenden Enden gebracht und gleichzeitig an beiden Enden angezogen. Die ursprüngliche Position der Gasarmatur bleibt erhalten. Die Gasarmatur kann dadurch problemlos ausgerichtet werden. Besonders vorteilhaft ist das Zwischenstück dem Querschnitt der Gasarmatur angepaßt und mit einer Griffhilfe, z. B. Griffmulden oder Rippen, ausgestattet. Die Spannmuffe besteht in der Regel aus Metall oder Kunststoff und wird über O-Ringe an den Anschlüssen abgedichtet. Ein Zwischenstück aus Kunststoff kann vorteilhaft so ausgeführt werden, daß eine direkte Abdichtung ohne zusätzliche Dichtungen möglich ist.

Die Gasarmatur zeichnet sich durch eine universelle Bauweise aus, die zu einer Reihe von Vorteilen führt.

Durch Einsatz einer Ganzmetallabdichtung im Bereich des direkten Gaskontaktes und Ausführung des Grundkörpers in Edelstahl oder Messing, insbesondere durch Einsatz von Membranventilen mit Hastelloy^{(R)} -Membran bei Druckregler und Absperrelement, ist die Gasarmatur für alle gängigen Reinstgase (z. B. Gase der Reinheit 6.0) verwendbar. Durch einfachen Austausch von gasartabhängig gefärbter Stellungsfahne und dem Gasartaufkleber kann die Gasarmatur an die Gasart leicht angepaßt werden. Das bedeutet, daß für einen gegebenen Druckregelbereich nur ein Standardtyp der Gasarmatur benötigt wird, beispielsweise jeweils ein Standardtyp für 1,5 bar, 4 bar und 10 bar maximalen Hinterdruck, wobei in der Regel nur andere Druckregler und Manometer eingebaut werden. Das ganze Spektrum von Gasarmaturen für die verschiedensten Anwendungen im Laborbereich/Labormöbelbereich (mindestens 15 verschiedene Typen) wird damit abgedeckt.

Die kompakte Außenfläche der Gasarmatur erlaubt eine einfache Reinigung. Das als Bedienelement des Druckreglers dienende Griffteil bietet einen effektiven Staubschutz und einen mechanischen Schutz für die innenliegenden Teile wie dem Manometer. Das Griffteil wirkt als Manometerschutzkappe.

Die Gasarmatur wird bevorzugt im Laborbereich verwendet, z. B. als Gasentnahmestelle bei Labormöbeln. Die Gasarmatur wird optional mit einem am Gasausgang der Gasarmatur angeordneten Dosierventil ausgestattet. Das Dosierventil ist in der Regel über eine kurze Gasleitung mit der Gasarmatur verbunden. Bei einer Montage in einer Labormöbelwand befinden sich Gasanschluß (Vordruck), Gasausgang und Gasleitungsstück zum Dosierventil hinter der Laborwand. Bei Kombination der Gasarmatur mit einem Dosierventil werden zwei Montageöffnungen in der Labormöbelwand benötigt gegenüber bisher mindestens drei Montageöffnungen bei üblichen Gasarmaturen.

Die Gasarmatur hat im allgemeinen folgende Maße: Durchmesser im Bereich von 35 bis 80 mm, vorzugsweise 45 bis 60 mm; Länge (ohne Gasanschluß und Spannmuffe) im Bereich von 50 bis 200 mm, vorzugsweise 100 bis 150 mm. Die Spannmuffe hat im allgemeinen einen Außendurchmesser wie die Gasarmatur (40 bis 80 mm) und eine Dicke gewöhnlich um 20 mm.

In der bevorzugten Ausführung hat die Gasarmatur, das heißt Griffteil und Verkleidung, einen Durchmesser von 50 mm. Das Griffteil hat hierbei eine Länge von 50 mm (ohne Fenster der Druckanzeige), Griffteil und Druckanzeigefenster ergeben hierbei eine Länge von 60 mm. Der Absperring hat hier einen Durchmesser um 50 mm und eine Dicke um 20 mm. Die Länge der Gasarmatur ohne Spannmuffe und Gasanschluß beträgt dabei etwa 113 mm.

Ein Ausführungsbeispiel wird Im folgenden anhand der Zeichnung näher beschrieben.

Es zeigen
Fig. 1 die Gasarmatur im Längsschnitt entlang der Achse A-A,
Fig. 2 einen Querschnitt der Gasarmatur in Höhe des Absperrelementes (entlang B-B),
Fig. 3 einen Teil (unterer Teil) der Gasarmatur mit Ansicht der Verstelleinrichtung des Absperrelementes,
Fig. 4 eine Draufsicht der Gasarmatur und
Fig. 5 eine Seitenansicht der Gasarmatur.

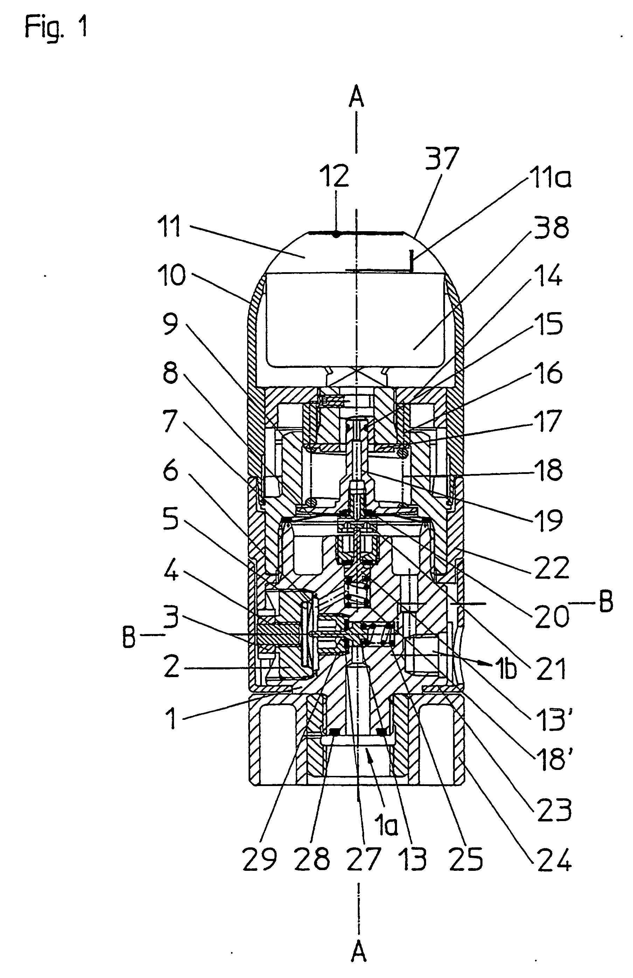

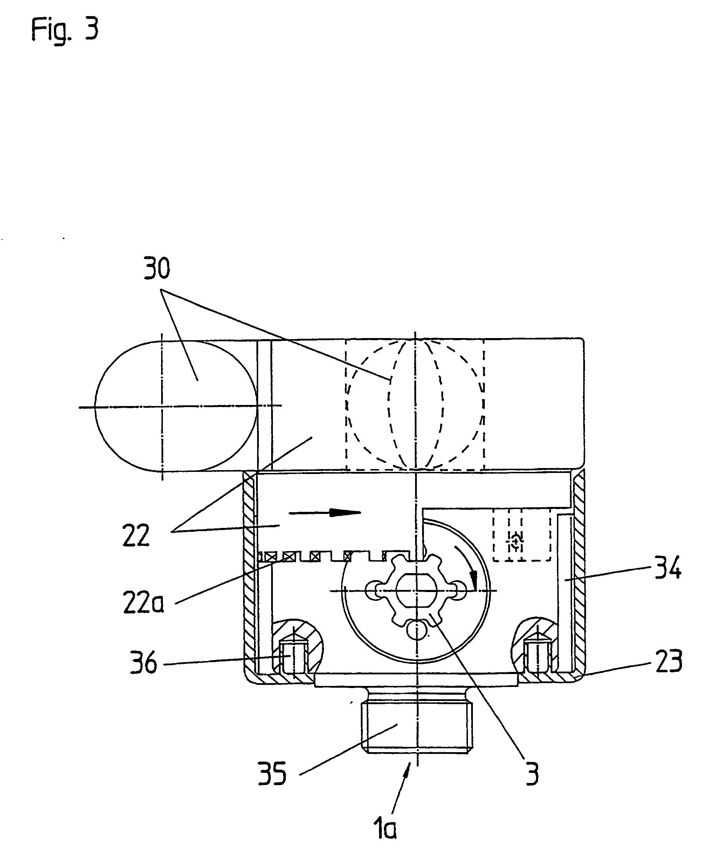

Fig. 1 zeigt die Gasarmatur im Längsschnitt. Der Grundkörper 1 (z. B. aus Messing oder Edelstahl) enthält einen eingehenden Gaskanal (Eingang 1a) für komprimiertes Gas (z. B. 40 bar) von der Druckgasquelle (z. B. Druckgasleitung). Der Gaskanal führt zum Absperrelement, das bevorzugt (wie gezeigt) aus einem Membranventil besteht. Das äußere Ende von Druckstück 4 des Membranventils ist doppelt abgeflacht (Ende mit Zweikant). Auf dieses Ende mit Zweikant von Druckstück 4 ist das Zahnrad 3 beweglich (Bewegung senkrecht zur Drehbewegung des Zahnrades) aufgesetzt. Das Druckstück 4 weist ein Außengewinde auf, das im Innengewinde der Halteschraube 2 bei Drehung des Zahnrades 3 bewegt wird. Eine Drehbewegung des Zahnrades 3 erzeugt eine Hubbewegung des Druckstückes 4. Durch die freie Kopplung des Zahnrades 3 mit dem Druckstück 4 über den Zweikant (Mitnehmer) folgt das Zahnrad 3 nicht der Hubbewegung des Druckstückes 4. In das Zahnrad 3 greifen die Zähne an der Unterkante des Absperringes 22. Da die Funktion Auf/Zu des Absperrelementes durch eine Viertelkreis-Drehung (Drehung um 90°) des Absperr-Ringes 22 erreicht werden soll, reicht eine Zahnung über ein Viertel des Kreisumfanges der unteren Kante des Absperringes 22 (s. Fig. 3) aus. Die Übersetzung der Zähne von Zahnrad 3 und Zähnen des Absperringes 22 ist entsprechend gewählt. Eine Übersetzung, z. B. 4:1 (Zähne von Absperring 22/Zähne von Zahnrad 3), führt zu einer leichten Bedienung des an sich schwergängigen Absperrelementes. Abweichend von üblichen Absperrelementen mit Membranventil wirken Federdruck und anliegender Hinterdruck in gleicher Richtung (Schließrichtung), wodurch eine höhere Sicherheit gewährleistet wird. Von dem Absperrelement führt ein Gaskanal zur Druckregelstufe. Die gezeigte Druckregelstufe besteht aus einem Membran-Druckregler mit Membranstange 19, Membran 8, Schließbolzen 13', oberer Druckfeder 18 und unterer Druckfeder 18'. Die Druckregelstufe wird von Grundkörper 1 und Federdeckel 9 umschlossen. Federdeckel 9 trägt am oberen Ende ein Außengewinde, auf dem die Regulierschraube 14 sitzt. Die Regulierschraube 14 besitzt einen Außensechskant. Griffteil 10 besitzt im unteren Bereich eine als Innensechskant geformte Aussparung. Der Innensechkant von Griffteil 10 nimmt den Außensechskant von Regulierschraube 14 auf. Bei Drehen von Griffteil 10 wird die Regulierschraube 14 auf dem Gewinde von Federdeckel 9 bewegt, wobei zwei Druckbolzen 16 auf oder ab bewegt werden. Der Außensechskant von Regulierschraube 14 bewegt sich dabei in dem von dem Innensechskant der Griffteil 10 gebildeten Kanal. Der untere Rand von Griffteil 10 ist leicht nach innen gebogen. Der Rand des Griffteiles setzt sich in eine Rille des Federdeckels 9 (in Fig. 1 ersichtlich). Die Druckbolzen 16 übertragen die Bewegung der Regulierschraube 14 auf den oberen Federanschlag 17. Die Druckkraft der Feder 18 auf die Membranstange 19 mit unterem Federanschlag wird damit eingestellt. Die Membranstange 19 stetzt sich nach unten über die Membranschraube 21, die einen Gaskanal enthält, in dem Schließbolzen 13' fort. Der Schließbolzen 13' besitzt ein vierkantiges Ende (Vierkant). Der Vierkant bewegt sich in der runden Bohrung des Gaskanals, in der eine Druckfeder 18' für einen Gegendruck sorgt. Nach der Druckregeleinheit verläßt das Gas mit vermindertem Druck über einen Gaskanal mit seitlichem Ausgang 1b am Grundkörper 1. Als weitere Besonderheit trägt die Gasarmatur im Bereich des Griffteiles 10 ein Manometer 38, das über eine zentrale Bohrung in der Membranstange 19 (Membranstange 19 ist hohl) und einen Gaskanal in der Membranschraube 21 mit dem Gaskanal auf der Seite des verminderten Drucks (Hinterdruck) in Verbindung steht. Das Manometer 38 ist an dessen zentralen Gaseingang mit der hohlen Membranstange 19 über eine Steckverbindung verbunden (Fixierung und Sicherung mittels Madenschraube). Das Manometer 38 mit der Druckanzeige 11 und Zeiger 11a ist durch ein transparentes, gewölbtes Fenster 37 ablesbar. Die Ablesbarkeit des Druckes ist von vorn und von der Seite möglich. Das Fenster 37 ist am Manometer 38 befestigt. Die Gasarmatur wird über die Spannmuffe 24 (vorzugsweise Rechtsgewinde und Linksgewinde) mit der Druckleitung (Gasquelle) verbunden.

Bei dem Einbau in Labormöbel wird die Gasarmatur bevorzugt in einer Labormöbelwand montiert, so daß die Gasarmatur im Bereich der (unteren) Verkleidung 23, das heißt unterhalb des Absperringes 22 und oberhalb des Gasausganges 1b, in der Labormöbelwand angebracht ist. Der Gasausgang liegt dann hinter der Labormöbelwand, frei für den Anschluß einer Gasentnahmeleitung. Die Gasentnahmeleitung führt in der Regel zu einem Gasentnahmeventil (Dosierventil), das ebenfalls in der Labormöbelwand befestigt ist und von der Vorderseite wie die Gasarmatur bedient wird. Von dem Gasentnahmeventil führt eine Gasleitung (z. B. Rohr- oder Schlauchleitung) zum Verbraucher.

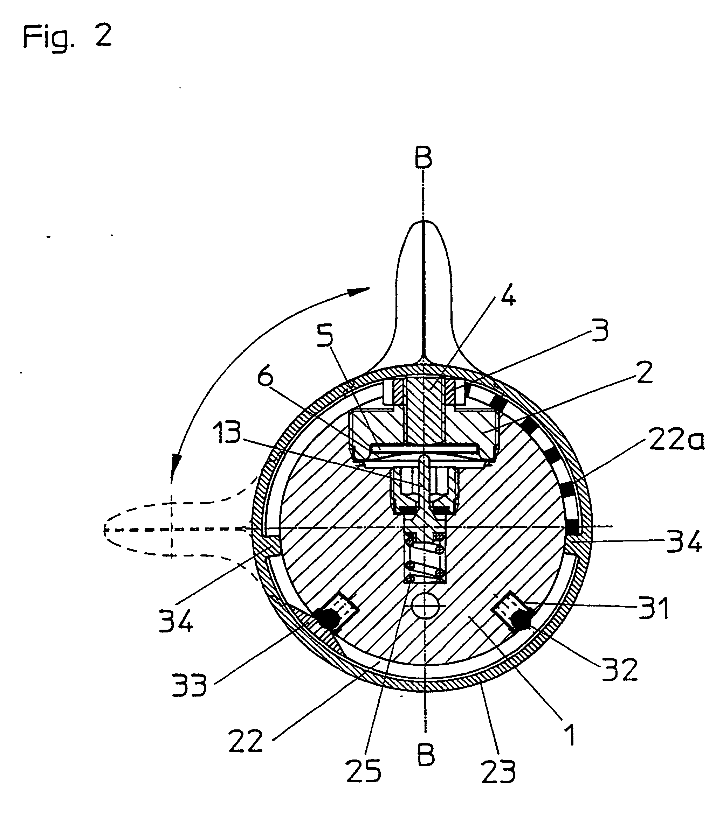

Fig. 2 zeigt die Gasarmatur von Fig. 1 im Querschnitt entlang der Linie B-B. Man erkennt das Absperrelement im Grundkörper 1, bestehend aus einem Membranventil mit den Teilen Druckfeder 25, Schließbolzen 13, Membran 6, Gleitscheibe 5 und Druckstück 4 mit Zahnrad 3, den Absperring 22 mit der Verzahnung 22a an der Unterkante des Absperringes 22. Die Verzahnung 22a erstreckt sich über ein Viertel des Umfanges von Absperring 22 (Verlängerung des Absperringes 22 im Bereich der Verzahnung 22a). Die Stellungsfahne 30 ist an Absperring 22, vorzugsweise über eine Steckverbindung, angebracht. Die Stellungsfahne 30 dient als Griff zur Betätigung des Absperrelementes. Die Verkleidung 23 ist mit zwei Begrenzungsrippen 34 im Abstand von 180° versehen, die im Bereich der Verzahnung 22a angebracht sind und Anschläge für die Enden der Verzahnung 22a bilden (siehe Fig. 3). Die gestrichelt gezeichnete Stellungsfahne 30 zeigt die geschlossene Stellung ("Zu") nach Drehung der Stellungsfahne 30 mit Absperring 22 um 90°.

Die "Auf"- und "Zu"-Stellung des Absperringes 22 wird mit Hilfe einer Einrastungsvorrichtung fühlbar eingestellt. Die Einrastvorrichtung hält den Absperring in der eingestellten Position. Das Einraststück 33 ist als zapfenförmige Verlängerung der Unterkante des Absperringes 22 ausgeführt. Das Einraststück 33 enthält eine Einrastöffnung für das Kugeldruckstück 32. Das Kugeldruckstück 32 mit einer Druckfeder befindet sich in der Aufnahmeöffnung 31 im Grundkörper 1.

Durch Drehung des Absperringes 22 wird über die in das Zahnrad 3 greifende Verzahnung 22a an der dem Zahnrad 3 zugewandten (unteren) Kante des Absperringes 22 die Drehbewegung in eine Hubbewegung umgesetzt. Das Verhältnis (Übersetzung) der Anzahl der Zähne von Zahnrad 3 und Verzahnung 22a ist so gewählt, daß der Drehung des Absperringes 22 um 90° eine Hubbewegung des Druckstückes 4, die auf den Schließbolzen 13 übertragen wird, für ein Öffnen und Schließen des Absperrelementes ausreicht. Bei dem gezeigten Absperrelement, einem Membranventil, wirken Gasdruck und Federdruck der Feder 25 in gleicher Richtung, das heißt in schließender Richtung des Schließkegels von Schließbolzen 13. Diese unübliche Ausrichtung von Gasdruck und Federdruck (üblich sind entgegengesetzte Druckrichtungen) sorgt für zusätzliche Sicherheit bei dem Absperrelement.

Fig. 3 zeigt das untere Teil der Gasarmatur. Das Zusammenwirken von Absperring 22 mit Verzahnung 22a und Zahnrad 3 ist dargestellt. Man erkennt die auf einen viertelkreisbogen beschränkte Verzahnung 22a und Verlängerung an dem Absperring 22. Die zwei Begrenzungsrippen 34 dienen als Anschlag für die beiden Endkanten des Absperringabschnittes mit der Verzahnung 22a. Durch das Zusammenwirken von Verzahnung 22a und Zahnrad 3 wird eine Drehung um die Längsachse der Gasarmatur in eine Drehung um eine Achse senkrecht zur Längsachse umgesetzt. Da das Druckstück 4 mit seinem Außengewinde in dem Innengewinde der Halteschraube 2 geführt wird, bewirkt eine Drehung eine Auf- oder Abbewegung (je nach Drehrichtung) des Druckstückes 4 und damit des Schließbolzens 13. Die Befestigungsnippel 36 dienen zur Befestigung der Verkleidung an dem Grundkörper 1. Über das Anschlußstück 35 wird die Druckgasleitung angeschlossen.

Die Halteschraube 2 weist an der Oberseite in 90° Abstand angeordnete Vertiefungen für die Montage auf (in Fig. 3 gezeigte Kreise ohne Nummerierung).

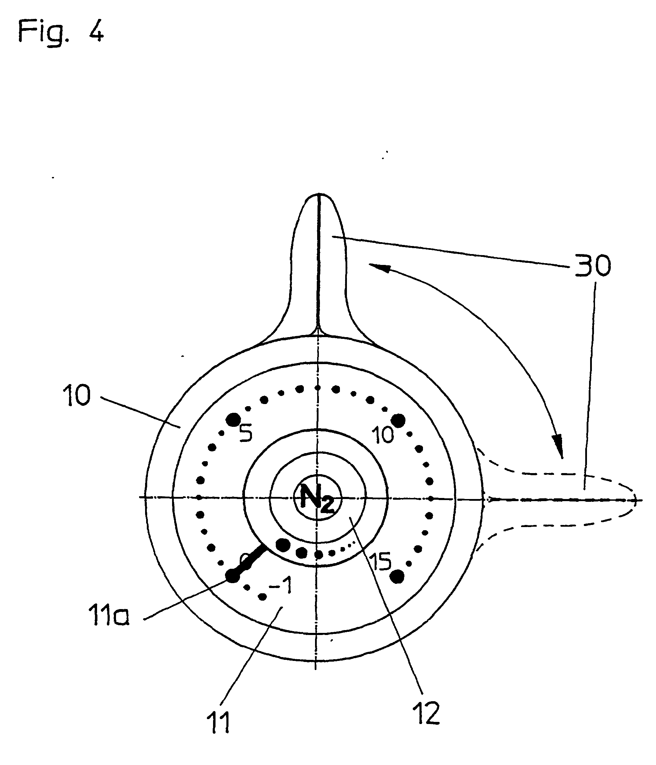

Fig. 4 zeigt die Gasarmatur in der Draufsicht (von oben; von der Bedienerseite). Der Druckregler wird mittels Griffteil 10 bedient. In das Griffteil 10 ist das Manometer 38 mit Druckanzeige 11 (Druckskala und Druckzeiger 11 a) und einer transparenten, vorzugsweise gewölbten Kunststoffabdeckung 37 (Fenster) integriert, wobei Griffteil 10 und die Druckmeß- und Druckanzeigeeinheit mit Manometer 38 mechanisch getrennt sind. Das Fenster 37 ist im mittleren Bereich vorzugsweise flach. Der flache Bereich des Fensters trägt das Gasartklebeschild 12.

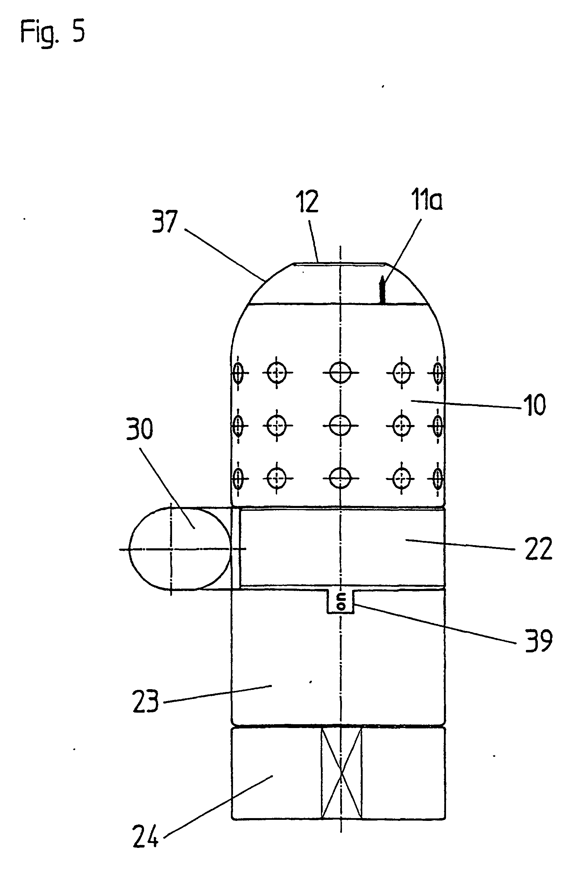

Fig. 5 die Gasarmatur in der Seitenansicht. Die Verkleidung 23 enthält einen Durchbruch oder eine Aussparung 39 als Sichtfenster zur Stellungsanzeige (Öffnungszustand Auf/Zu) der Absperrelementes. Das Sichtfenster 39 zeigt je nach Stellung des Absperringes 22 eine von zwei darauf in 90° Abstand angebrachten Stellungsmarkierungen "(Auf" oder "Zu"). Am Absperring 22 ist die Stellungsfahne 30 angebracht. Die Stellungsfahne 30 wird bevorzugt durch Einklipsen an dem Absperring 22 angebracht. Vorteilhaft hat die Stellungsfahne 30 die gasarttypische Farbe. Die Gasarmatur ist universell (das heißt für die verschiedenen Gase) verwendbar. Durch eine austauschbare Stellungsfahne 30 und Gasartklebeschild 12 kann die Gasarmatur sehr leicht an die zu verwendende Gasart angepaßt werden.

### Bezugszeichenliste

- 1: Grundkörper
- 1a: Gaseingang
- 1 b: Gasausgang
- 2: Halteschraube
- 3: Zahnrad
- 4: Druckstück
- 5: Gleitscheibe (Metall, PTFE-beschichtet)
- 6: Membran
- 7: Gleitring
- 8: Membran mit Loch
- 9: Federdeckel
- 10: Bedienelement des Druckreglers (Griffteil)
- 11: Druckanzeige
- 11 a: Druckzeiger
- 12: Gasart-Klebeschild
- 13, 13': Schließbolzen
- 14: Stellmutter (Regulierschraube)
- 15: Dichtung
- 16: Druckbolzen
- 17: oberer Federanschlag
- 18, 18': Feder
- 19: Membranstange (mit unterem Federanschlag)
- 20: Membrandichtung
- 21: Membranschraube
- 22: Absperr-Ring
- 22a: Verzahnung auf Absperr-Ringkante
- 23: Verkleidung
- 24: Spannmuffe
- 25: Druckfeder
- 27: Ventilsitzdichtung
- 29: Ventilsitzschraube
- 30: Stellungsfahne
- 31: Aufnahmeöffnung für Druckfeder und Kugel der Einrastvorrichtung
- 32: Kugel (Kugeldruckstück)
- 33: Einraststück (Verlängerung von Absperr-Ring 22)
- 34: Begrenzungsrippe in der Verkleidung
- 35: Anschluß zur Druckgasleitung
- 36: Befestigungsnippel
- 37: Fenster der Druckanzeige
- 38: Druckmeßinstrument (Manometer)
- 39: Fenster oder Aussparung zur Stellungsanzeige

## Patentansprüche

1. Gasarmatur mit Vordruckabsperrelement (13), Druckregler (8, 13', 18, 18', 19) und Manometer (38) zur Druckanzeige, wobei das Vordruckabsperrelement und den Druckregler in einer Reihe zwischen Manometer (38) und Druckgasquelle angeordnet sind und **dadurch gekennzeichnet, daß** das Manometer (38) mit Druckanzeige (11) innerhalb des Bedienelementes (10) für den Druckregler angeordnet ist.

2. Gasarmatur nach Anspruch 1, **dadurch gekennzeichnet, daß** das Bedienelement (10) einen Hohlraum zur Aufnahme des Manometers (38) aufweist.

3. Gasarmatur nach Anspruch 1 oder 2, **dadurch gekennzeichnet, daß** das Absperrelement über einen Absperring 22 betätigt wird.

4. Gasarmatur nach Anspruch 3, **dadurch gekennzeichnet, daß** der Absperring (22) durch Drehen oder Schieben betätigt wird.

5. Gasarmatur nach Anspruch 3, **dadurch gekennzeichnet, daß** der Absperring (22) durch Drehen betätigt wird und das Absperrelement mit dem Absperring (22) mittels einer Übersetzung verbunden ist.

6. Gasarmatur nach Anspruch 5, **dadurch gekennzeichnet, daß** die Übersetzung durch eine Verzahnung (22a) an dem Absperring (22) und ein Zahnrad (3) des Absperrelementes gebildet wird.

7. Gasarmatur nach einem der Ansprüche 1 bis 6, **dadurch gekennzeichnet, daß** das Absperrelement ein Ventil mit Druckfeder (25) und Schließbolzen (13) mit Schließkegel ist und der Gasdruck und die Druckfeder (25) in einer Richtung wirken und einen Druck auf den Schließkegel ausüben.

8. Gasarmatur nach einem der Ansprüche 1 bis 7, **dadurch gekennzeichnet, daß** das Manometer (38) mit der Vordruckseite über ein Hohlteil (19), das ein Teil des Druckreglers ist, verbunden ist.

9. Verwendung der Gasarmatur nach einem der Ansprüche 1 bis 8 im Laborbereich oder für Labormöbel.

10. Verwendung nach Anspruch 9, **dadurch gekennzeichnet, daß** die Gasarmatur mit einem Gasdosierventil kombiniert wird.

## Claims

1. A gas fitting having a supply-pressure shut-off element (13), a pressure regulator (8, 13', 18, 18', 19) and a pressure gage (38) for pressure indication, the supply-pressure shut-off element and the pressure regulator being arranged in a row between pressure gage (38) and compressed-gas source, **characterized in that** the pressure gage (38) with pressure indication (11) is arranged inside an operating element (10) for the pressure regulator.

2. The gas fitting according to claim 1, **characterized in that** the operating element (10) has a cavity for accommodating the pressure gage (38).

3. The gas fitting according to claim 1 or 2, **characterized in that** the shut-off element is actuated via a shut-off ring (22).

4. The gas fitting according to claim 3, **characterized in that** shut-off ring (22) is actuated by rotation or sliding.

5. The gas fitting according to claim 3, **characterized in that** the shut-off ring (22) is actuated by rotation, and the shut-off element is connected to the shut-off ring (22) by means of a transmission.

6. The gas fitting according to claim 5, **characterized in that** the transmission is formed by a tooth system (22a) on the shut-off ring (22) and a gear (3) of the shut-off element.

7. The gas fitting according to any one of claims 1 to 6, **characterized in that** the shut-off element is a valve having a compression spring (25) and a closing pin (13) having a closing cone, and the gas pressure and the compression spring (25) act in one direction and exert pressure on the closing cone.

8. The gas fitting according to any one of claims 1 to 7, **characterized in that** the pressure gage (38) is connected to the supply-pressure side via a hollow part (19), which is part of the pressure regulator.

9. Use of the gas fitting according to any one of claims 1 to 8 in the laboratory sector or for laboratory furniture.

10. Use according to claim 9, **characterized in that** the gas fitting is combined with a gas-metering valve.

## Revendications

1. Robinetterie de gaz avec un élément d'arrêt de prépression (13), d'un régulateur de pression (8, 13', 18, 18', 19) et d'un manomètre (38) pour l'affichage de la pression, l'élément d'arrêt de prépression et le régulateur de pression étant disposés en série entre le manomètre (38) et la source de gaz comprimé, **caractérisée en ce que** le manomètre (38) avec l'affichage de pression (11) est disposé à l'intérieur de l'élément de commande (10) pour le régulateur de pression.

2. Robinetterie de gaz selon la revendication 1, **caractérisé en ce que** l'élément de commande (10) présente une cavité creuse pour le logement du manomètre (38).

3. Robinetterie de gaz selon la revendication 1 ou 2, **caractérisée en ce que** l'élément d'arrêt soit actionné par une bague d'arrêt 22.

4. Robinetterie de gaz selon la revendication 3, **caractérisée en ce que** la bague d'arrêt (22) est actionnée par rotation ou par poussée.

5. Robinetterie de gaz selon la revendication 3, **caractérisée en ce que** la bague d'arrêt (22) est actionnée par rotation et l'élément d'arrêt est relié à la bague d'arrêt (22) au moyen d'une transmission.

6. Robinetterie de gaz selon la revendication 5, **caractérisée en ce que** la transmission est formée par une denture (22a) à la bague d'arrêt (22) et une roue dentée (3) de l'élément d'arrêt.

7. Robinetterie de gaz selon l'une des revendications 1 à 6, **caractérisé en ce que** l'élément d'arrêt est une soupape avec un ressort à pression (25) et un boulon de fermeture (13) avec un cône de fermeture et la pression de gaz et le ressort de pression (25) agissent dans une direction et exercent une pression sur le cône de fermeture.

8. Robinetterie de gaz selon l'une des revendications 1 à 6, **caractérisé en ce que** le manomètre (38) est relié au côté de prépression par une pièce creuse (19) qui fait partie du régulateur de pression.

9. Utilisation de la robinetterie de gaz selon l'une des revendications 1 à 8 dans le domaine des laboratoires ou pour du mobilier de laboratoire.

10. Utilisation selon la revendication 9, **caractérisée en ce que** la robinetterie de gaz est combinée par une soupape de dosage de gaz.
